Europäisches Patentamt

European Patent Office

Office européen des brevets

(11) Veröffentlichungsnummer : **0 188 654**
**B1**

# (12) EUROPÄISCHE PATENTSCHRIFT

(45) Veröffentlichungstag der Patentschrift :
15.06.88

(21) Anmeldenummer : 85107468.2

(22) Anmeldetag : 15.06.85

(51) Int. Cl.⁴ : **F 16 L   3/20**

(54) Aufhängevorrichtung für sich verschiebende Lasten, insbesondere Rohrleitungen und dergleichen.

(30) Priorität : 22.01.85 DE 3501853

(43) Veröffentlichungstag der Anmeldung :
30.07.86 Patentblatt 86/31

(45) Bekanntmachung des Hinweises auf die Patenterteilung : 15.06.88 Patentblatt 88/24

(84) Benannte Vertragsstaaten :
FR GB IT

(56) Entgegenhaltungen :
DE-A- 2 320 549
DE-A- 2 623 929
FR-A- 2 217 618
US-A- 2 391 467

(73) Patentinhaber : LISEGA Kraftwerkstechnik GmbH
Industriegebiet Hochkamp
D-2730 Zeven (DE)

(72) Erfinder : Hardtke, Hans-Herlof
Bremervörder Strasse 3
D-2730 Zeven (DE)

(74) Vertreter : Schönwald, Karl, Dr.-Ing. et al
Deichmannhaus
D-5000 Köln 1 (DE)

## Beschreibung

Die Erfindung bezieht sich auf eine Aufhängevorrichtung für sich verschiebende Lasten, insbesondere Rohrleitungen u. dgl., mit einer konstant bleibenden Zugkraft, bei der zu der zwischen dem Aufhängeteil und dem Lasttrageteil angeordneten, die Last aufnehmenden Federung Zusatzfederungen zur Kompensation der sich ändernden Zug- und Druckkraft der Hauptfederung vorgesehen sind, wobei die Zusatzfederungen als Druckfederungen über Rollen mit zwischen den Zusatzfederungen und der Hauptfederung angeordneten Kurventeilen zusammenwirken.

Durch die DE-A-26 23 929 ist es bekannt, die Zusatzfederungen parallel verlaufend neben der Hauptfederung vorzusehen, wobei zwischen den Kurventeilen und den Zusatzfederungen als Übertragungsglied ein Winkelhebel mit ortsfester Achse angeordnet ist. Eine solche Aufhängevorrichtung ergibt eine Stabilisierung des Federsystems bei Änderung des Lastfalles, wobei Pendelbewegungen vermieden sind. Eine etwaige Ungenauigkeit der Kurventeile macht sich auf das Arbeiten des Federsystems nicht ausschlaggebend bemerkbar. Die Winkelhebel wirken mittels einer Verbindungsstange auf das verschiebbare Widerlager der Zusatzfederung ein. Obwohl bei dem bekannten Federsystem die Bauhöhe der Aufhängevorrichtung sich reduzieren läßt, erstreckt sich die Konstruktion noch sehr in die Breite und ist an Bauteilen aufwendig.

Die Erfindung betrifft eine weitere Verbesserung der Aufhängevorrichtung der beschriebenen Art sowohl in konstruktiver Hinsicht als auch hinsichtlich einer stabilen und ruhigen Arbeitsweise des ganzen Federsystems. Bei der Aufhängevorrichtung der anfangs genannten Art zeichnet sich die Erfindung dadurch aus, daß die Kurventeile an selbständigen, einarmig gelagerten Schwenkhebeln angeordnet sind.

Bei einer solchen Ausbildung der Aufhängevorrichtung läßt sich die Bauhöhe der Aufhängegeräte noch weiter erheblich verringern. Dies ergibt sich im wesentlichen dann, wenn die Schwenkhebel aufwärtsstehend gelagert sind, d. h. wenn der Lagerpunkt sich unten befindet. Ferner ist die Anzahl der benötigten Einzelteile bei der Konstruktion der Erfindung gegenüber früheren Konstruktionen stark verringert. Da die Kurventeile an Schwenkhebeln angebracht sind, können die sonstigen hierfür verwendeten zusätzlichen Hebel entfallen und damit auch aufwenige Lageraufnahmen für diese. Die Schwenkhebel stellen separate Bauteile dar, die nicht mit dem Gehäuse oder anderen massiven Einzelteilen der Konstruktion fest verbunden sind. Dadurch können sie auf numerisch gesteuerten Werkzeugmaschinen mit höchster Genauigkeit bearbeitet und anschließend oberflächenbehandelt werden.

Vorteilhaft sind die Lagerpunkte für die Schwenkhebel in der Höhe des Mittelbereiches der Hauptfederung angeordnet, wobei sich die Zusatzfedern und die Kurventeile der Schwenkhebel im oberen Bereich der Hauptfedern befinden können. Man erzielt auf diese Weise eine gedrungene Bauart des Gerätes sowohl in der Höhe als auch in der Breite.

Gemäß einem weiteren Merkmal der Erfindung sind zwischen den Schwenkhebeln und den Zusatzfederungen Justierelemente angeordnet, die aus einfachen Einstellschrauben bestehen können. Dadurch ergibt sich für das Justieren der Zusatzfedern eine sehr gute Zugänglichkeit für die Justierelemente. Beide Zusatzfedern sind getrennt einstellbar, wodurch abweichende Federraten auf einfache Weise ausgeglichen werden können. Durch das Einstellen der Justierelemente läßt sich ferner leicht erreichen, daß die Hauptfeder in der Mitte des Gerätes gehalten wird. Ferner kann die Null-Lage des Gerätes leicht so justiert werden, daß die Hauptfederung in der Höhe der Scheitel der Kurventeile auf diese einwirkt. Aufwendige Führungen können entfallen.

Das Kopfstück der Hauptfederung ist zweckmäßig mit den Rollen ausgerüstet, an denen die Kurventeile der Schwenkhebel anliegen.

Ein weiteres Erfindungsmerkmal besteht darin, daß im Gegensatz zu früheren Konstruktionen die Zusatzfedern keine Schraubenfedern mehr zu sein brauchen. Es ist vielmehr z. B. der Einsatz von platzsparenden und kostengünstigen Blattfedern möglich.

Die Erfindung wird anhand der in der Zeichnung dargestellten Ausführungsbeispiele nachstehend erläutert.

Fig. 1 zeigt eine Ausführungsform der Aufhängevorrichtung gemäß der Erfindung als Konstanthänger im Längsschnitt und im Schema.

Fig. 2 stellt einen Schnitt nach der Linie II-II der Fig. 1 schematisch dar.

Fig. 3 und 4 veranschaulichen im Längsschnitt und im Schnitt nach der Linie IV-IV der Fig. 3 eine andere Ausführungsform der Erfindung, bei der die Schwenkhebel hängend vorgesehen sind.

Fig. 5 und 6 zeigen eine weitere Ausführungsform des Erfindungsgegenstandes im Längsschnitt und in Seitenansicht, schematisch, wobei als Zusatzfedern Blattfedern verwendet sind.

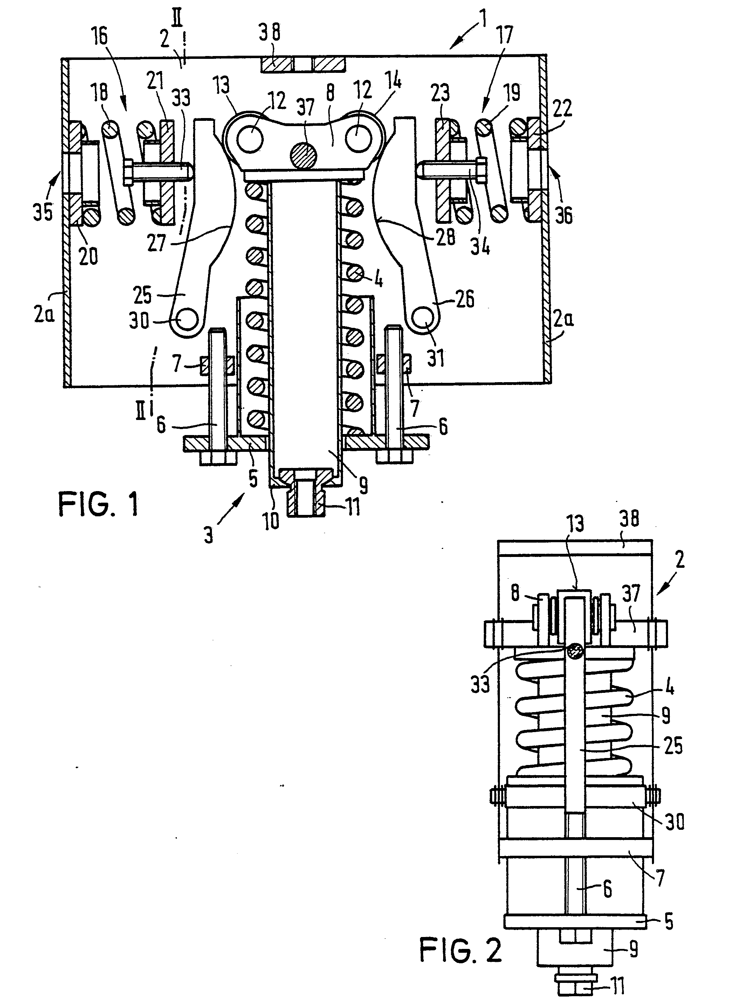

Die Aufhängevorrichtung 1 als Konstanthänger für sich verschiebende Lasten wie Rohrleitungen u. dgl. nach den Fig. 1 und 2 weist ein Gehäuse 2 als Aufhängeteil auf, in dem ein Lasttrageteil 3 vorgesehen ist, das unter der Wirkung einer die Last aufnehmenden Hauptfederung 4 steht. Die Hauptfederung 4 stützt sich gegen ein unteres Widerlager 5 ab, das mittels Schraubbolzen 6 zur unteren Quertraverse 7 des Gehäuses 2 verstellbar angeordnet ist. Mit ihrem anderen Ende stützt sich die Hauptfederung 4 an einem Kopfstück 8 ab, das als Widerlager dient, an dem eine Hülse 9 befestigt ist, die über das untere Widerlager 5 vorsteht und am unteren Ende eine Querplatte 10 aufweist. Diese ist als Pfanne für einen Pendelbolzen 11 zur Aufnahme der zu tragenden Last, z. B. einer Halterung, einer Rohrleitung od. dgl., ausgebildet. Das Kopfstück 8 trägt an beiden Seiten bei 12 seitlich vorstehend gelagerte Rollen 13 und 14.

Die Zusatzfederungen 16 und 17 zur Kompensation einer aus einer Mittelstellung sich ändernden Zug- und Druckkraft der Hauptfederung 4 für die Konstanthaltung der Haltekraft bestehen aus Druckfedern 18 und 19, die zwischen den Widerlagern 20 und 21 einerseits und den Widerlagern 22 und 23 andererseits angeordnet sind und in Querrichtung zu der Hauptachse der Hauptfederung 4 verlaufen. Zwischen der Hauptfederung 4 bzw. dem Kopfstück 8 dieser mit den Rollen 12 und 13 und den Zusatzfederungen 16 und 17 sind Schwenkhebel 25 und 26 angeordnet, an denen unmittelbar Kurventeile 27 und 28 angebracht sind, die mit den Rollen 13 und 14 des Kopfstückes 8 der Hauptfederung 4 zusammenwirken. Die Schwenkhebel stehen unter der Wirkung der Zusatzfederungen 16, 17. Die Schwenkhebel 25, 26 sind vorteilhaft aufwärtsstehend an den Bolzen 30 und 31 gelagert. Hierbei befinden sich die Zusatzfedern 16, 17 und die Kurventeile 27, 28 der Schwenkhebel 25, 26 im oberen bzw. im mittleren Bereich der Hauptfeder 4.

Zwischen den Zusatzfedern 16 und 17 und den Schwenkhebeln 25, 26 sind vorteilhaft Justierelemente 33, 34 angeordnet, die zweckmäßig aus Einstellschrauben bestehen. In der Längsachse dieser Justierelemente sind Durchbrechungen 35 und 36 an den Widerlagern 20, 22 und den Gehäusewänden 2a vorgesehen. Dadurch sind die Einstellschrauben 33, 34 zum Justieren der Zusatzfedern sehr gut zugänglich, wobei die Zusatzfedern 16, 17 getrennt für sich eingestellt werden können. Für die Null-Lage des Federsystems ist es zweckmäßig, daß die Rollen 13, 14 der Hauptfeder 4 sich an den Scheiteln der Kurventeile 27, 28 befinden.

Das Kopfstück 8 mit der Federhülse 9 ist zweckmäßig mittels eines Querbolzens 37 in einem Längsschlitz des Gehäuses 2 geführt. Mit 38 ist die Halterung zum Anbringen des Gerätes an einem ortsfesten Gestell bezeichnet.

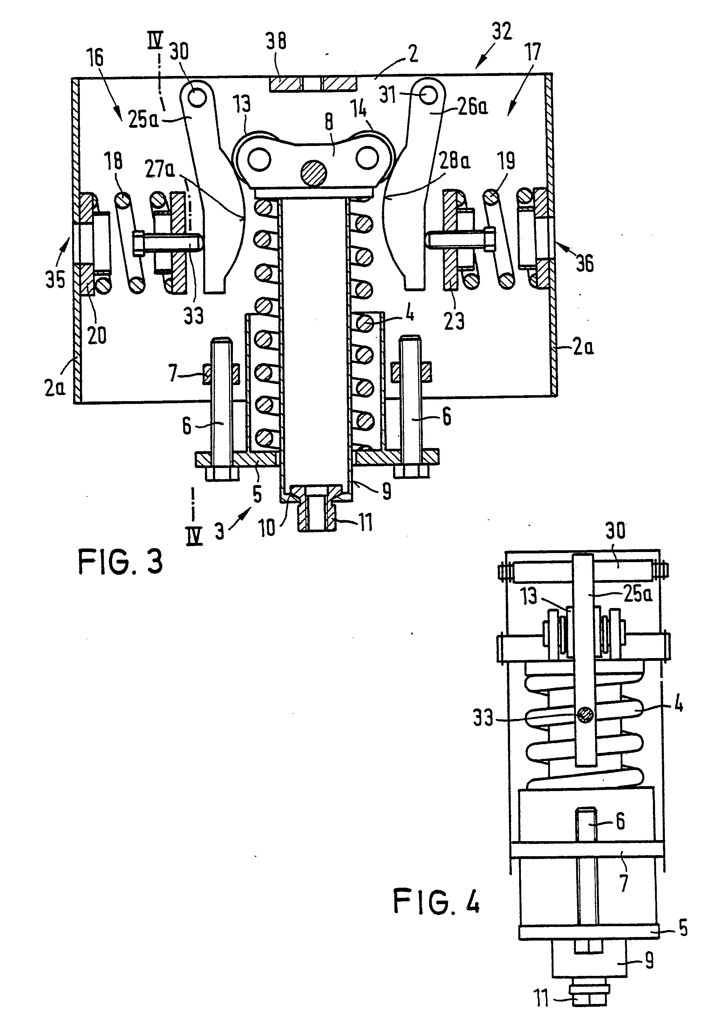

Bei dem Ausführungsbeispiel der Aufhängevorrichtung 32 der Fig. 3 und 4 sind die Schwenkhebel 25a, 26a, hängend zwischen den Zusatzfederungen 18, 19 und dem Kopfstück 8 mit den Rollen 13, 14 der Hauptfederung 4 angeordnet, d. h. die Lagerachsen 30, 31 befinden sich am oberen Ende der Schwenkhebel. Dadurch werden keine größeren Abmessungen für das Gerät, d. h. das Gehäuse der Aufhängevorrichtung, als bei der ersten Ausführungsform erforderlich. Die Gedrungenheit des Gerätes bleibt gewahrt.

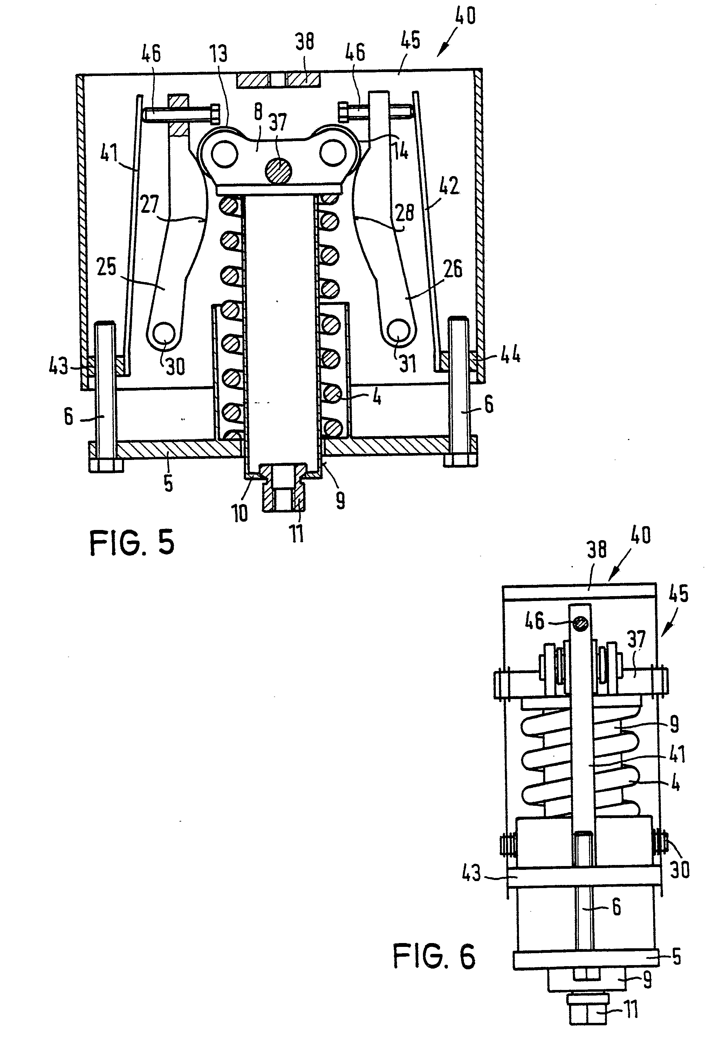

Die Ausführungsform 40 der Aufhängevorrichtung nach den Fig. 5 und 6 ähnelt der Ausführungsform 1 nach den Fig. 1 und 2 jedoch mit dem Unterschied, daß die Zusatzfederung statt der Schraubenfedern aus einer Blattfederung gebildet ist. Die gleichen Teile sind mit denselben Bezugszeichen nach den Fig. 1 und 2 versehen.

Die Aufhängevorrichtung nach den Fig. 5 und 6 weist als Zusatzfederung Blattfedern 41 und 42 auf, die aus einer oder mehreren Federlamellen bestehen können. Die Blattfedern 41, 42 sind am unteren Ende an Querlaschen 43 und 44 des Gehäuses 45 befestigt und wirken mit dem oberen freien Ende gegen die Schwenkhebel 25, 26, vorteilhaft mit Hilfe von Justierelementen 46, die sich zweckmäßig an den Schwenkhebeln 25, 26 befinden. Mit Hilfe der Blattfedern als Zusatzfederung ergibt sich ein besonders gedrungenes Gerät in Höhe und Breite.

## Patentansprüche

1. Aufhängevorrichtung (1) für sich verschiebende Lasten, insbesondere Rohrleitungen u. dgl., mit einer konstant bleibenden Zugkraft, bei der zu der zwischen dem Aufhängeteil (2) und dem Lasttrageteil (3) angeordneten, die Last aufnehmenden Federung (4) Zusatzfederungen (16, 17 ; 41, 42) zur Kompensation der sich ändernden Zug- und Druckkraft der Hauptfederung (4) vorgesehen sind, wobei die Zusatzfederungen (16, 17 ; 41, 42) als Druckfederungen über Rollen (13, 14) mit zwischen den Zusatzfederungen (16, 17 ; 41, 42) und der Hauptfederung (4) angeordneten Kurventeilen (27, 28) zusammenwirken, dadurch gekennzeichnet, daß die Kurventeile (27, 28) an selbständigen, einarmig gelagerten Schwenkhebeln (25, 26) angeordnet sind.

2. Aufhängevorrichtung nach Anspruch 1, dadurch gekennzeichnet, daß die Schwenkhebel (25, 26) aufwärtsstehend gelagert sind.

3. Aufhängevorrichtung nach einem der Ansprüche 1 oder 2, dadurch gekennzeichnet, daß die Lagerpunkte (30, 31) der Schwenkhebel (25, 26) in der Höhe des Mittelbereiches der Hauptfederung (4) angeordnet sind, und daß die Zusatzfedern (16, 17) und die Kurventeile (27, 28) der Schwenkhebel (25, 26) sich in dem oberen Bereich der Hauptfederung (4) befinden.

4. Aufhängevorrichtung nach einem der Ansprüche 1 bis 3, dadurch gekennzeichnet, daß zwischen den Schwenkhebeln (25, 26) und den Zusatzfederungen (16, 17 ; 41, 42) Justierelemente (33, 34 ; 35, 46), z. B. Einstellschrauben, angeordnet sind.

5. Aufhängevorrichtung nach einem der Ansprüche 1 bis 4, dadurch gekennzeichnet, daß das Kopfstück (8) der Hauptfederung (4) die Rollen (13, 14) trägt, an denen die Kurventeile (27, 28) der Schwenkhebel (25, 26) anliegen.

6. Aufhängevorrichtung nach einem der Ansprüche 1 bis 5, dadurch gekennzeichnet, daß die Schwenkhebel (25, 26) unter der Wirkung von Schraubenfedern (18, 19) stehen.

7. Aufhängevorrichtung nach einem der Ansprüche 1 bis 5, dadurch gekennzeichnet, daß die Schwenkhebel (25, 26) unter der Wirkung von Blattfedern (41, 42) stehen.

## Claims

1. Suspension device (1) for movable loads, especially pipes and the like, with a constant tension, in which, in addition to the spring means (4) which takes up the load and is arranged between the suspension part (2) and the load-carrying part (3), there are provided additional spring means (16, 17 ; 41, 42) to compensate for variations in tension and compression of the main spring (4), wherein the additional springs (16, 17 ; 41, 42) co-operate as pressure springs via rollers (13, 14) with cam portions (27, 28) arranged between the additional springs (16, 17 ; 41, 42) and the main spring (4), characterised in that the cam portions (27, 28) are arranged on independent pivotally mounted singlearm levers (25, 26).

2. Suspension device according to claim 1, characterised in that the pivoted levers (25, 26) are mounted so as to be upwardly standing.

3. Suspension device according to one of claims 1 or 2, characterised in that the bearing points (30, 31) of the pivoted levers (25, 26) are arranged on a level with the middle region of the main spring (4) and in that the additional springs (16, 17) and the cam portions (27, 28) of the pivoted levers (25, 26) are located in the upper region of the main spring (4).

4. Suspension device according to one of claims 1 to 3, characterised in that between the pivoted levers (25, 26) and the additional springs (16, 17 ; 41, 42) adjusting elements (33, 34 ; 35, 46), e. g. adjusting screws, are provided.

5. Suspension device according to one of claims 1 to 4, characterised in that the head piece (8) of the main spring (4) carries the rollers (13, 14) against which the cam portions (27, 28) of the pivoted levers (25, 26) rest.

6. Suspension device according to one of claims 1 to 5, characterised in that the pivoted levers (25, 26) are under the influence of coil springs (18, 19).

7. Suspension device according to one of claims 1 to 5, characterised in that the pivoted levers (15, 16) are under the influence of leaf springs (41, 42).

**Revendications**

1. Dispositif de suspension (1) pour charge mobile, en particulier, pour conduites tubulaires ou analogues, à force de traction constante, dans lequel il est prévu, en plus des moyens élastiques (4) interposés entre la partie de suspension (2) et la partie support de charge (3), et qui soutiennent la charge, des moyens élastiques additionnels (16, 17 ; 41, 42) destinés à compenser les variations de la force de traction et de compression des moyens élastiques principaux (4), les moyens élastiques additionnels (16, 17 ; 41, 42), réalisés sous la forme de moyens élastiques de compression, coopérant par l'intermédiaire de galets (13, 14) avec des éléments formant cames (27, 28) interposés entre les moyens élastiques additionnels (16, 17 ; 41, 42) et les moyens élastiques principaux (40) caractérisé en ce que les éléments formant cames (27, 28) sont prévus sur des leviers oscillants indépendants (25, 26) montés en leviers à un seul bras.

2. Dispositif de suspension selon la revendication 1, caractérisé en ce que les leviers oscillants (25, 26) sont montés dirigés vers le haut.

3. Dispositif de suspension selon l'une des revendications 1 et 2, caractérisé en ce que les points d'articulation (30, 31) des leviers oscillants (25, 26) sont disposés au niveau de la région médiane des moyens élastiques principaux (4) et en ce que les ressorts additionnels (16, 17) et les éléments formant cames (27, 28) des leviers oscillants (25, 26) se trouvent dans la région supérieure des moyens élastiques principaux (4).

4. Dispositif de suspension selon l'une des revendications 1 à 3, caractérisé en ce que des éléments de réglage (33, 34 ; 35, 46), tels des vis de réglage, sont agencés entre les leviers oscillants (25, 26) et les moyens élastiques additionnels (16, 17 ; 41, 42).

5. Dispositif de suspension selon l'une des revendications 1 à 4, caractérisé en ce que la pièce de tête (8) des moyens élastiques principaux (4) porte des galets (13, 14) contre lesquels sont appuyées les cames (27, 28) des leviers oscillants (25, 26).

6. Dispositif de suspension selon l'une des revendications 1 à 5, caractérisé en ce que les leviers oscillants (25, 26) sont soumis à l'action de ressorts hélicoïdaux (18, 19).

7. Dispositif de suspension selon l'une des revendications 1 à 5, caractérisé en ce que les leviers oscillants (25, 26) sont soumis à l'action de ressorts à lame (41, 42).

0 188 654

FIG. 1

FIG. 2

1

FIG. 3

FIG. 4

FIG. 5

FIG. 6